# EUROPEAN PATENT APPLICATION

(11) **EP 4 755 762 A1**
(43) Date of publication of application: **10.06.2026**
(21) Application number: 25220874.9
(22) Date of filing: 04.12.2025
(51) Int. Cl.: B62D 21/07, B62D 21/17, B62D 35/00

(54) **FRAME FOR A MOTOR VEHICLE HAVING AN AERODYNAMIC VENT DUCT THROUGH A LONGITUDINAL ABSORPTION BEAM**

(30) Priority: 09.12.2024 IT 202400027936
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

A frame (3) for a motor vehicle (1) comprises a front frame portion (41), in turn comprising a wheel arch (8) defining a wheel well (9) for accommodating a wheel (2) of the motor vehicle (1), a suspension attachment structure (42) with one or more attachment members (49) configured to allow a suspension (S) of the motor vehicle (1) to be coupled at the wheel well (9), and a longitudinal absorption beam (46) for absorbing energy of a frontal impact of the motor vehicle (1), the longitudinal absorption beam (46) being fixed relative to the suspension attachment structure (42) and extending cantilevered from the suspension attachment structure (42), characterized by comprising at least one conduit (50) extending with continuity at least through the longitudinal absorption beam (46) and the suspension attachment structure (42) between an inlet opening (26) on the longitudinal absorption beam (46) and an outlet opening (27) longitudinally downstream of the suspension attachment structure (42).

## Description

### CROSS-REFERENCE TO RELATED APPLICATIONS

This patent application claims priority from Italian patent application no. 102024000027936 filed on December 9, 2024, the entire disclosure of which is incorporated herein by reference.

### FIELD OF THE ART

The invention relates to a frame for a motor vehicle, more in particular a front frame with an absorption structure for absorbing energy of frontal impacts and a suspension attachment structure.

### PRIOR ART

As is known, the front frame of a motor vehicle has both a function of support of body members, i.e. external covering metal sheets, such as the bumper or the bonnet, and a function of absorbing the energy of frontal impacts, i.e. occurring along the forward direction of the motor vehicle.

In particular, for the absorption of the energy of a frontal impact, the frame specifically includes an absorption structure or box, also known as a "crash box", which includes a pair of longitudinal absorption side members or beams (also called struts) extending parallel to the forward direction.

In some cases, the side members extend, in particular directly, starting from a suspension attachment structure, also known as a "shock tower", including the attachments for the front suspensions of the motor vehicle.

The front suspensions couple the front wheel hubs of the motor vehicle to the suspension attachment structure.

The wheel hubs, forming part of respective wheels of the motor vehicle, are in turn housed at respective front wheel wells defined by corresponding wheel arches of the frame and arranged alongside, according to a side direction with respect to the forward direction, the suspension attachment structure.

During the travel of the motor vehicle, the front of the bumper and/or the absorption structure are normally subject to an aerodynamic pressure due to the aerodynamic flow generated by the travel of the motor vehicle itself.

Therefore, the need is felt to decrease the aerodynamic pressure, preferably without weakening the frame or adversely affecting the aerodynamic performance of the motor vehicle significantly.

An aim of the invention is to meet the need set out above, preferably in a simple and reliable manner.

### DISCLOSURE OF THE INVENTION

The aim is achieved by a motor vehicle as defined in claim 1.

The dependent claims define particular embodiments of the invention.

### BRIEF DESCRIPTION OF THE DRAWINGS

In the following, an embodiment of the invention is described for a better understanding thereof by way of nonlimiting example and with reference to the accompanying drawings in which:
- Figure 1 is a perspective view of a motor vehicle comprising a frame according to the invention,

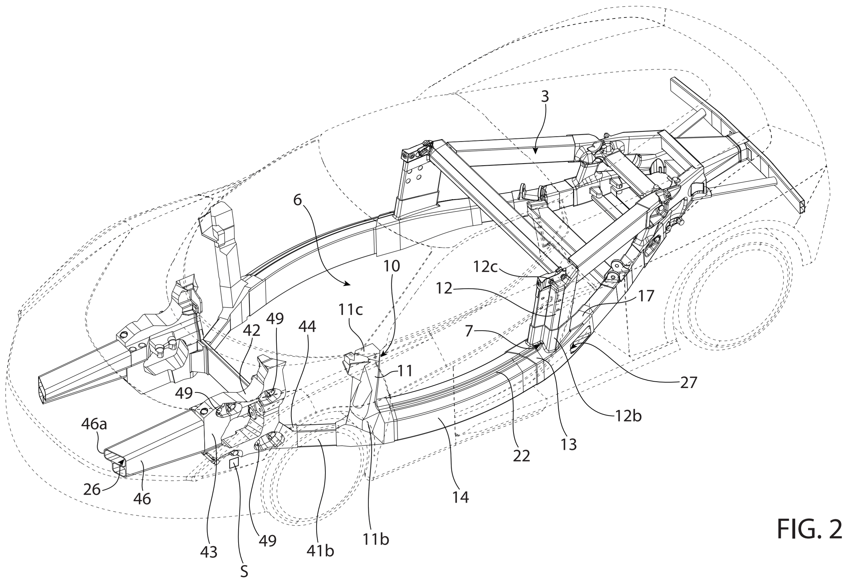

- Figure 2 is similar to Figure 1 but with parts of the motor vehicle in transparency, so that the frame is more visible,

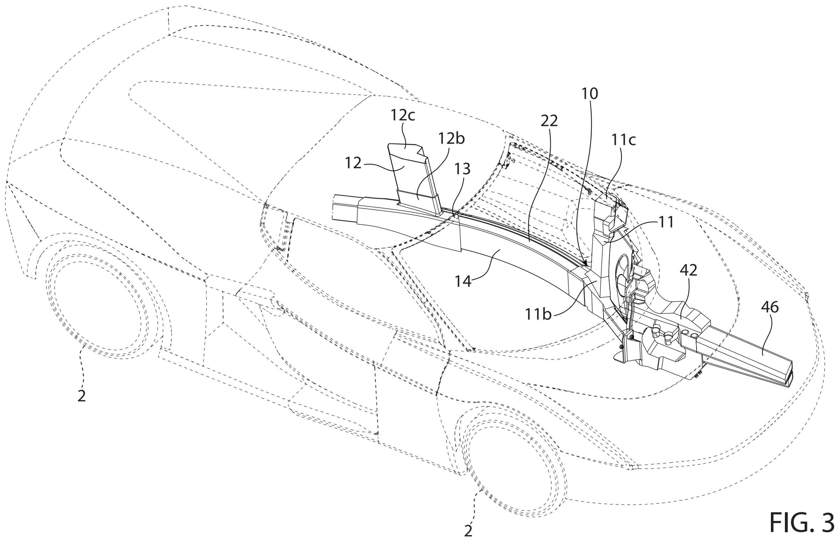

- Figure 3 is a further perspective view of the motor vehicle as shown in Figure 2 according to a distinct perspective point of view,

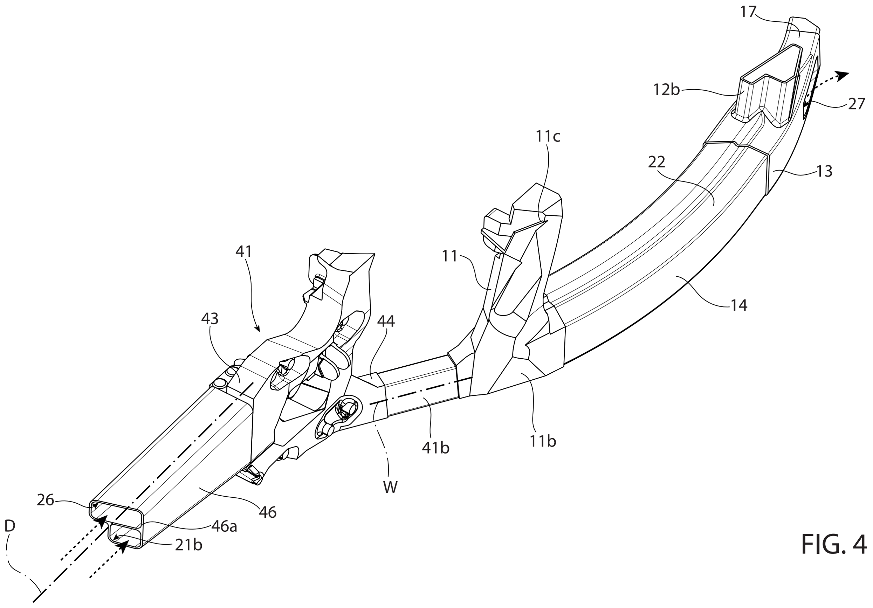

- Figure 4 is a perspective view, on an enlarged scale, of a detail of the frame,

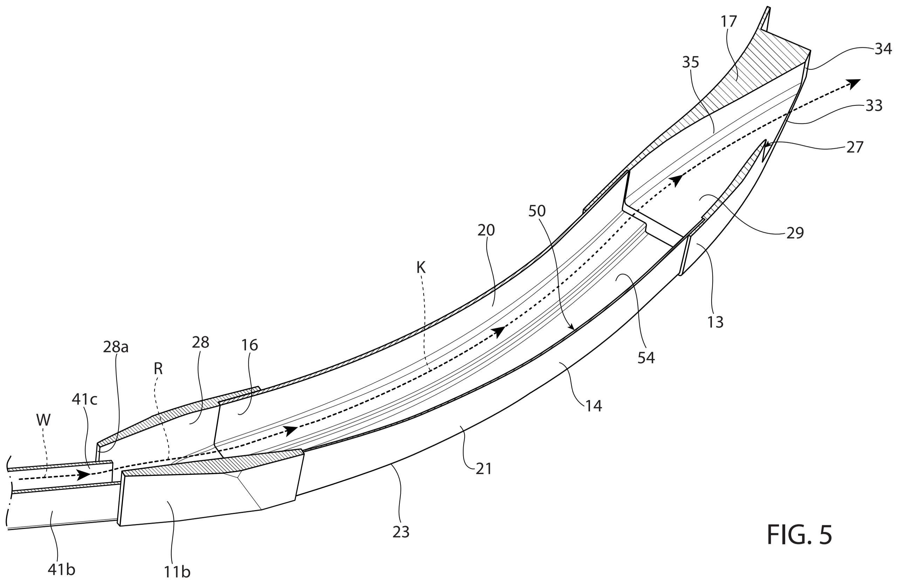

- Figure 5 shows a cut-away view of a rear portion of the detail of Figure 4, with parts removed for clarity, according to a horizontal sectional plane,

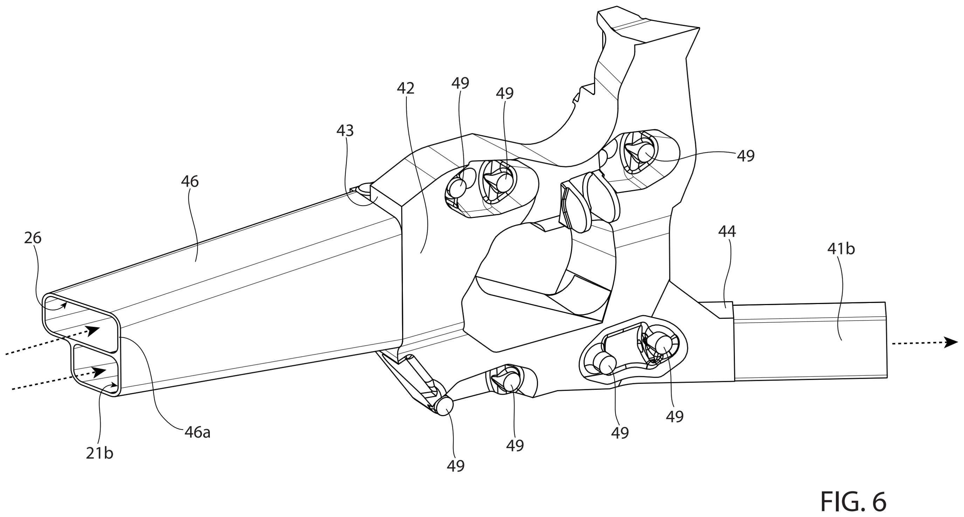

- Figure 6 is a perspective view, on a further enlarged scale, of a front portion of the detail of Figure 4,
- Figure 7 shows a cut-away view of the portion of Figure 6 according to a vertical sectional plane, and

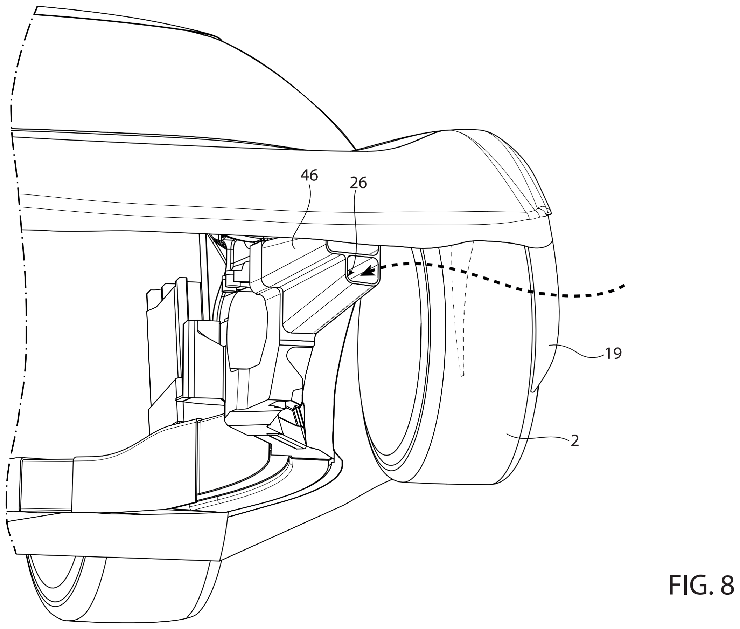

- Figure 8 is a perspective view of the motor vehicle, with parts removed for clarity, according to a front point of view of the motor vehicle.

### EMBODIMENTS OF THE INVENTION

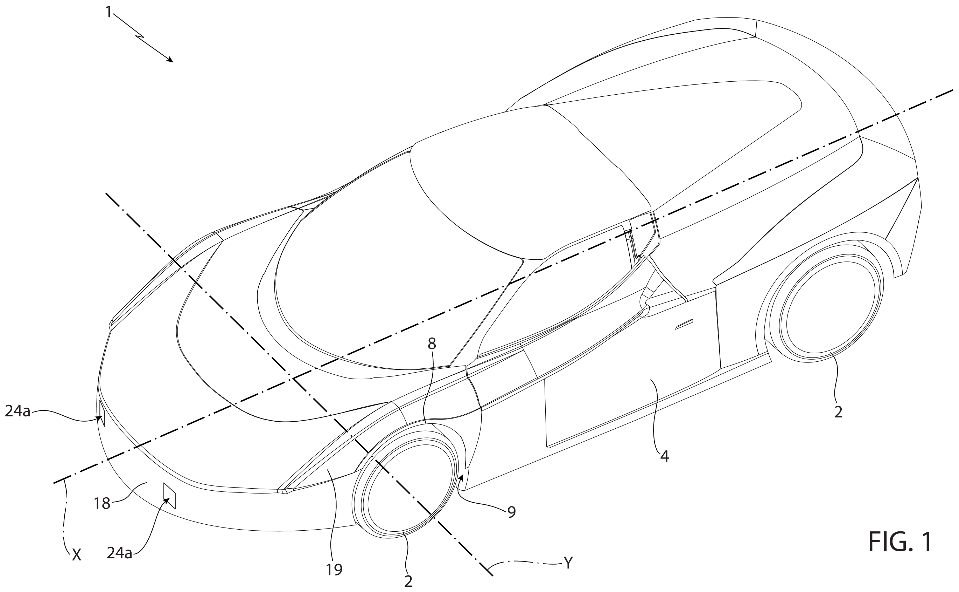

In Figure 1, reference numeral 1 is used to denote, as a whole, a motor vehicle.

The motor vehicle 1 comprises a plurality of wheels 2 and a frame 3, in particular suspended with respect to the wheels 2 by means of suspensions S, for example of known type and shown only schematically. Thus, the suspensions S are on one side coupled to the wheels 2 and on the other side coupled to the frame 3 to suspend the latter on the wheels 2.

The motor vehicle 1 further comprises a side door 4 coupled or attached to the frame 2, in particular in a movable manner between an open position and a closed position.

The motor vehicle 1 has a normal forward direction along a longitudinal axis or roll axis X of the motor vehicle 1. The forward direction is also applicable to the frame 3, as the latter is intended to be part of the motor vehicle 1.

The motor vehicle 1 also has a pitch axis Y according to a side direction and/or a direction transversal to the forward direction. In particular, the pitch axis Y is horizontal.

Hereinafter, expressions such as frontal, rear, front, back, in front, behind, and the like shall be understood with reference to the forward direction.

Similarly, expressions such as lower, upper, above, below, at the top, at the bottom, high, low and the like shall be understood with reference to the normal conditions of use of the motor vehicle 1 for which the frame 3 is intended.

The frame 3 comprises a frame portion or frame cell defining or delimiting a passenger compartment 6 of the motor vehicle 1. More generally, the frame 3 itself can define or delimit the passenger compartment 6, in particular by means of the frame cell.

The frame 3 or more precisely the frame cell comprises a door frame 7 for the coupling or attachment of the door 4.

The frame 3 further comprises a wheel arch 8 defining, in particular below it, a wheel well 9 intended to accommodate one of the wheels 2.

In particular, the wheel well 9 is arranged in front of the door frame 7.

The door frame 7 defines or delimits and in particular circumscribes (i.e. delimits internally) an access opening 10 for providing side access to the passenger compartment 6.

The access opening 10 is in particular closed and opened towards the outside of the motor vehicle 1 from the door 4 respectively when the door 4 is in the open position and in the closed position.

The door frame 7 comprises at least two pillars 11, 12 and a longitudinal beam 13, in particular an under-door beam or sill.

The pillar 11 is more forward than the pillar 12. Independently and preferably, the pillars 11, 12 define the longitudinal limits or ends (i.e., according to the forward direction) of the access opening 10. Therefore, the pillars 11, 12 define the so-called A-pillar and B-pillar B of the door frame 7.

The pillars 11, 12 extend upwards or vertically starting from respective lower ends 11b, 12b towards or up to respective upper ends 11c, 12c.

The longitudinal beam 13 is fixed and more particularly welded to the pillars 11, 12 at the lower ends 11b, 12b.

Thus, the longitudinal beam 13 defines a lower longitudinal member of the door frame 7 and more in particular it defines at least in part the lower end of the door frame 7.

Preferably, the longitudinal beam 13 is or comprises a tubular or box-shaped beam. Independently and preferably, each of the pillars 11, 12, taken individually and independently of the other, can be or comprise at least one casting member, i.e. a beam obtained by casting molten metal on respective moulds; the casting member is substantially solid, i.e. it occupies a full volume except for holes or hollow parts obtained on a smaller portion of its extension.

In other words, while the volume occupied by the longitudinal beam 13 is for the most part (e.g. more than 70%) empty, the respective volumes occupied by the casting members of the pillars 11, 12 are for the most part solid (e.g. more than 70%). Clearly, the expressions solid and empty refer to the presence or absence of solid material, respectively.

The longitudinal beam 13 comprises a beam portion 14 extending longitudinally between the lower ends 11b, 12b.

Specifically, for example, the beam portion 14 is an intermediate portion of the longitudinal beam 13, whereby the latter may comprise a front end 16 and/or a rear end 17 according to the forward direction.

In greater detail, the ends 16, 17, independently of each other, interpenetrate the lower ends 11b, 12b.

Here, the end 16 terminates at the lower end 11b.

In particular, independently, the end 17 terminates downstream of the pillar 12 or of the lower portion 12b itself according to a (longitudinal) direction opposite to the forward direction.

Here, the lower portion 12b protrudes cantilevered from the end 17 which in particular runs longitudinally under the lower portion 12b.

According to an alternative not shown, the end 17 may terminate at the lower end 12b, for example as the end 16 in the embodiment shown.

On the other hand, the beam portion 14 is longitudinally delimited by or between the pillars 11, 12 or more precisely by or between their lower portions 11b, 12b.

The beam portion 14, as well as more generally the longitudinal beam 13, extends longitudinally along an axis K, for example curvilinear and in particular with a concave shape towards the passenger compartment 6.

The beam portion 14 has two side walls 20, 21 facing each other according to a direction transversal to the axis K and of which the wall 20 is the one laterally more internal or closer to the passenger compartment 6 (in other words, the wall 21 is instead the one that is the most exposed laterally to the outside of the motor vehicle 1 or farthest from the passenger compartment 6).

Furthermore, in particular, the beam portion 14 has an upper wall and a lower wall 22, 23, each coupled to both side walls 20, 21 to close the cross-section of the beam portion 14 with respect to the axis K.

The beam portion 14 is internally hollow, thus defining a conduit portion 24 that extends in particular for the entire longitudinal extension (in particular along the axis K) of the beam portion 14.

The conduit portion 24 may also extend so as to be defined in part by the beam portion 14, and defined in part by the end 16 or completed by the cavity defined by the end 16.

The walls 20, 21, in particular together with the walls 22, 23, delimit the conduit portion 24; the conduit portion 24 is delimited between the walls 20, 21 laterally.

The frame 3 comprises a front frame portion 41 having in particular, at least in part, a function of supporting front body members of the motor vehicle 1, such as for example a front bumper 18, a front fender 19, and the like.

The front frame portion 41 may comprise the wheel arch 8, which is thus a front wheel arch.

The front frame portion 41 comprises a suspension attachment structure 42 (front), alternatively called "shock tower".

The structure 42 is structurally connected or coupled (via the frame 3) to the pillar 11, in particular fixedly with respect to the pillar 11.

More in detail, the structure 42 is structurally connected or coupled to the pillar 11 by a further connection structure of the frame 3, the connection structure preferably being comprised or defined by a longitudinal beam 41b.

The structure 42 is structurally connected to the pillar 11 in a forward position with respect to the pillar 11, i.e. it is arranged upstream of the pillar 11 according to the direction opposite to the forward direction.

The structure 42 is substantially longitudinally aligned with the pillar 11; in other words, the structure 42 and the pillar 11 are arranged on the same side of the frame 3 with respect to a longitudinal (vertical) centre-line plane of the frame 3.

In particular, the longitudinal beam 41b extends longitudinally along an axis W, for example straight and/or in particular (slightly) inclined laterally towards the outside of the motor vehicle 1 (with respect to the passenger compartment 6) according to the direction opposite to the forward direction, that is, observing the axis W from the front towards the rear of the motor vehicle.

Preferably, the longitudinal beam 41b (similarly to the longitudinal beam 13) is a tubular beam and/or is internally hollow so as to define a conduit portion 41c that extends in particular for the entire longitudinal extension (in particular along the axis W) of the longitudinal beam 41b.

The structure 42 may preferably be a single piece, for example defined by a casting member, for example filled to at least more than 50% of the occupied volume, i.e. the most part of the occupied volume.

The structure 42 has a function of supporting part of the suspensions S. In fact, the front frame portion 41 also comprises a plurality of attachment elements or attachments 49 configured to allow the coupling of part of the suspensions S to the structure 42 at the wheel well 9.

The attachments 49 are located at the structure 42 and can generally be part of it.

The part of the suspensions S is coupled to the structure 42 via the attachments 49, in particular in a movable manner with respect to the structure 42.

This part of the suspensions S is coupled, in addition to the structure 42, to the wheel 2 (still preferably in a movable manner with respect to the wheel 2) housed in the wheel well 9.

The structure 42 is preferably arranged alongside the wheel well 9, in particular internally with respect to the wheel well 9, according to a direction transversal to the forward direction or according to the pitch axis Y.

The structure 42 extends longitudinally (i.e., according to the forward direction) between a front end 43 and a rear end 44.

The front frame portion 41 comprises a longitudinal absorption beam or side member or strut 46 for absorbing the energy of a frontal impact of the motor vehicle 1. In particular, the longitudinal absorption beam 46 extends along the forward direction or more precisely parallel to the forward direction.

The longitudinal absorption beam 46 is fixed relative to the structure 42, i.e. it is fixed to the structure 42, and is in particular distinct from the structure 42.

The longitudinal absorption beam 46 extends along an axis D, preferably straight and/or parallel to the forward direction.

The longitudinal absorption beam 46 extends starting from the structure 42 (in particular from the end 43), i.e. it protrudes or extends cantilevered from or with respect to the structure 42 (or the end 43), in particular towards the bumper 18, until it terminates with an end 46a opposite to the structure 42 and in particular transversal to the axis D. Specifically, the longitudinal absorption beam 46 extends directly starting from the structure 42 (or from the end 43), i.e. it protrudes or extends cantilevered directly therefrom.

The longitudinal absorption beam 46 is part of an absorption structure of the front frame portion 41; the absorption structure is alternatively referred to as a "crash box".

The frame 3 comprises at least one conduit 50 extending with continuity at least through the longitudinal absorption beam 46 and the structure 42 between an inlet opening 26 on the longitudinal absorption beam 46, in particular obtained on the end 46a along the axis D (i.e. the axis D passes longitudinally through the inlet opening 26 along the axis D), and an outlet opening 27 longitudinally downstream of the structure 42, in particular downstream of the wheel well 9, according to the direction opposite to the forward direction.

The outlet opening 27 is generally obtained on the frame 3 downstream of the structure 46 and/or the wheel well 9.

The inlet opening 26 is arranged to catch a part of the aerodynamic flow of the motor vehicle 1 during the travel of the latter along the forward direction.

In particular, the inlet opening 26 is turned towards a front of the motor vehicle 1 or of the frame 3; in other words, the axis D at the inlet opening 26 has at least one component along the forward direction and is in particular aligned with the forward direction.

For example, the inlet opening 26 could communicate with an opening 24a on the bumper 18 to receive the part of the aerodynamic flow of the motor vehicle 1. The opening 24a could for example be aligned with the inlet opening 26 along the axis D.

For example, in addition to the opening 24a (where present), the inlet opening 26 could communicate with a through channel of an absorption cross beam or absorption beam (not shown) fixed to the longitudinal absorption beam 46 and arranged in front (in particular right in front) of the longitudinal absorption beam 46, more precisely at the end 46a; the latter through channel could be defined by an opening aligned for example with the inlet opening 26 and optionally with the opening 24a along the axis D. The absorption cross beam could be part of the absorption structure or "crash box".

The conduit 50 comprises at least one conduit portion 51 extending from the inlet opening 26 for the entire longitudinal dimension, i.e. the length, of the longitudinal absorption beam 46 or up to the structure 42, in particular up to its end 43. In particular, the conduit portion 51 is a straight portion and extends along the axis D.

In general, throughout the description, the expression longitudinal dimension may be replaced with the expression length.

The conduit 50 further comprises a conduit portion 52 which continues with continuity from the conduit portion 51 (or communicates therewith) passing longitudinally through the structure 42 from the end 43 to the end 44, i.e. more in particular passing longitudinally through the structure 42 from part to part in a pass-through manner.

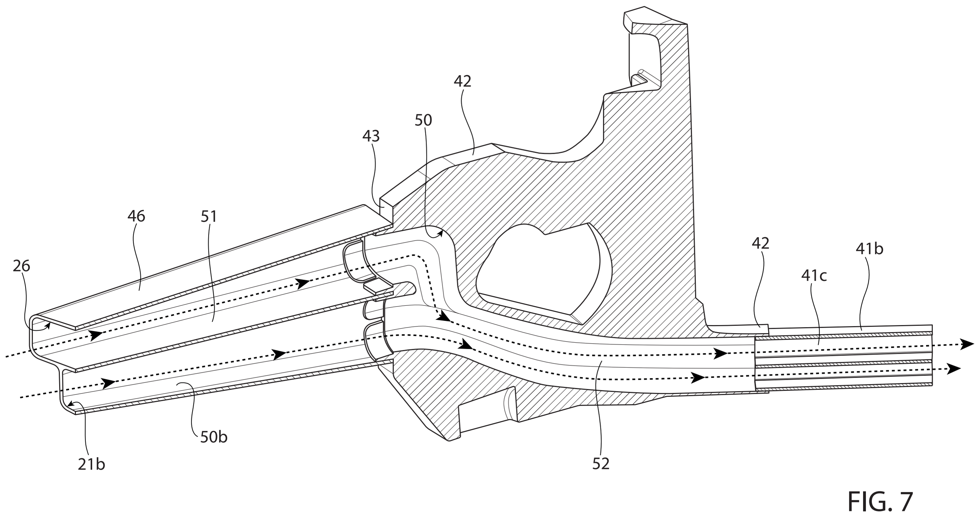

For example, as shown in Figure 7, the frame 3 comprises a further conduit 50b extending starting from an inlet opening 21b on the longitudinal absorption beam 46 so as to pass through the latter parallel to the conduit portion 51 up to the structure 42 (or up to its end 43) and here then continue through the structure 42 until connecting with or rejoining to the conduit 50 and in particular the conduit portion 52.

Preferably, the conduit 50 continues continuously from the structure 42 through the longitudinal beam 41b. In other words, the conduit 50 comprises the conduit portion 41c, which communicates with the conduit portion 52 or extends starting from the conduit portion 52 continuously.

In particular, the conduit 50 continues continuously from the longitudinal beam 41b through the pillar 11.

Preferably, the pillar 11 has a hole 28, in particular having an inlet end 28a, in particular communicating with the conduit portion 41c. In detail, the hole 28 extends through the pillar 11, in particular starting from the conduit portion 41c with continuity.

Specifically, the hole 28 extends longitudinally along an axis R.

According to an embodiment not shown, the outlet opening 27 could be part of the hole 28, i.e. it could be on the pillar 11.

More generally, regardless of the specific details described, in particular regarding the connection structure between the pillar 11 and the structure 42, the conduit 50 could also extend through the pillar 11, downstream of the structure 42 or more precisely of the conduit portion 52, according to the direction opposite to the forward direction, possibly also with the outlet opening 27 on the pillar 11 according to embodiments not shown. In fact, the pillar 11 is arranged behind the structure 42 and/or the wheel well 9 and therefore conceptually downstream of the structure 42 and/or the wheel well 9 according to the direction opposite to the forward direction.

In other words, the conduit 50 may comprise the hole 28.

The longitudinal beam 41b or more generally the aforementioned connection structure is not strictly necessary for the purposes of the invention, so it is optional and could be absent. In this case, for example, the hole 28 could communicate with the conduit portion 52 or start from the conduit portion 52 with continuity.

Where present, the connection structure would have a longitudinal through hole for putting in communication the conduit portion 52 with the hole 28 or more precisely with the end 28b.

Preferably, regardless of the details described above, the conduit 50 also extends through the longitudinal beam 13 (downstream of the structure 42, according to the direction opposite to the forward direction) and particularly through the beam portion 14, for example passing through the pillar 11.

In particular, the conduit 50 comprises the conduit portion 24.

In this case, the hole 28 has an end 28b (in particular longitudinally opposite to the end 28a, more in particular according to the axis R) communicating with the conduit portion 24.

The conduit 50 extends longitudinally between the inlet opening 26 and the outlet opening 27, whereby it begins and ends with the inlet opening 26 and the outlet opening 27, respectively.

The openings 26, 27 communicate with the outside of the frame 3 or more precisely of the motor vehicle 1. Here, in the description, by outside is meant the outside of the passenger compartment 6 or the side opposite to the passenger compartment 6, in particular according to the pitch axis Y.

The inlet opening 26 is arranged in front of the outlet opening 27 according to the forward direction.

In the embodiment shown, the outlet opening 27 is on the longitudinal beam 13, in particular on the end 17 and more in particular downstream or below the pillar 12 or the lower portion 12b according to the direction opposite to the forward direction.

In other words, the outlet opening 27 is on a part of the end 17 with the pillar 12 longitudinally (or along the axis K) arranged between the beam portion 14 and the same part of the end 17.

Alternatively, the outlet opening 27 may be on the pillar 12 or more precisely on the lower portion 12b.

Preferably, the inlet opening 26 and independently the outlet opening 27 are turned towards the outside of the motor vehicle 1 (on the side opposite to the passenger compartment 6) .

In particular, the outlet opening 27 is arranged on a face of the longitudinal beam 13 or of the pillar 12 turned to the outside of the motor vehicle 1 (on the side opposite to the passenger compartment 6).

Conveniently, the axis K of the longitudinal beam 13 is also the axis of a part of the conduit 50, in particular at least of the conduit portion 54 or more generally the part of the conduit 50 defined by the longitudinal beam 13. Preferably, the axis K is a continuation of the axis R, i.e. it extends starting from the axis R with continuity.

The outlet opening 27 defines an outlet path for the part of the aerodynamic flow caught through the inlet opening 26 towards a rear of the motor vehicle 1 or of the frame 3.

In particular, the outlet opening 27 is turned towards the rear of the motor vehicle 1 or of the frame portion; in other words, the axis K at the outlet opening 27 has at least one component along the direction opposite to the forward direction and preferably also a further side component towards the outside of the motor vehicle 1.

Preferably, the conduit 50 comprises a further conduit portion 29 downstream of the conduit portion 24 according to the direction opposite to the forward direction.

The conduit portion 29 communicates with the conduit portion 24 or part of the conduit portion 24 and terminates with the outlet opening 27.

The conduit portion 29 extends, like the conduit portion 24, longitudinally along the axis K; in other words, the axis K is also the axis of the conduit portion 29.

Specifically, the conduit portion 29 is defined by the end 17; alternatively, the conduit portion 29 could (in particular in the case of the outlet opening 27 on the pillar 12) have been defined by the pillar 12 or by the lower portion 12b, for example as a through hole through the pillar 12 or the lower portion 12b, the through hole being communicating with the conduit portion 24.

The outlet opening 27 has or is delimited by a contour 33 having a rearmost portion or edge 34 according to the forward direction.

The edge 34 is connected to the wall 20 by a fillet 35 defined at least in part or entirely by a surface of the pillar 12 or the longitudinal beam 13 (in particular the end 17) laterally delimiting the conduit 50 or more precisely the conduit portion 29.

With the fillet 35, the longitudinal stresses applied to the longitudinal beam 13 can propagate along the same longitudinal beam 13 with continuity, i.e. without encountering discontinuities. This allows the longitudinal beam 13 not to be significantly weakened by the presence of the outlet opening 27.

From the foregoing, the advantages of the motor vehicle 1 according to the invention are evident.

Thanks to the conduit 50, the aerodynamic flow impacting on the front of the frame 3 finds a longitudinal vent path by passing through the longitudinal absorption beam 46 and the structure 42 to then vent towards the rear of the motor vehicle 1 or of the frame 3.

In this way, the pressure exerted by the aerodynamic flow on the front of the frame 3 drops drastically.

Since the outlet opening 27 is downstream of the beam portion 14, the latter can define the conduit portion 24 of the conduit 50 despite being free of holes, in particular on the walls 20, 21. This is extremely advantageous, since the beam portion 14 is a very important load-bearing member of the frame portion, in particular since it is the load-bearing member on which in practice the entire frame 3 is supported; the presence of holes on the beam portion 14 would be particularly pernicious, since, in addition to introducing serious aerodynamic disturbances, it would also introduce the need to reinforce and therefore weigh down the longitudinal beam 13.

Finally, it is clear that modifications and variants can be made to the motor vehicle 1 according to the invention which, however, do not fall outside the scope of protection defined by the claims.

In particular, the shape of each of the components described and shown could be different, with particular reference to the pillars 11, 12, the longitudinal beam 13, the structure 42, and the longitudinal absorption beam 46.

Finally, expressions such as "upstream of" and "downstream of", according to the direction opposite to the forward direction, can be made alternatively as "in front" and "behind", in particular again with reference to the forward direction.

## Claims

1. Frame (3) for a motor vehicle (1) having a forward direction, the frame (3) comprising a front frame portion (41), in turn comprising
- a wheel arch (8) defining a wheel well (9) to accommodate a wheel (2) of the motor vehicle (1),
- a suspension attachment structure (42) with one or more attachment elements (49) configured to allow a coupling of a suspension (S) of the motor vehicle (1) at the wheel well (9), and
- a longitudinal absorption beam (46) for absorbing energy of a frontal impact of the motor vehicle (1), the longitudinal absorption beam (46) being fixed relative to the suspension attachment structure (42) and extending cantilevered with respect to the suspension attachment structure (42) along a first axis (D) until terminating with an end (46a) opposite to the suspension attachment structure (42),
**characterized by** comprising at least one conduit (50) extending with continuity at least through the longitudinal absorption beam (46) and the suspension attachment structure (42) between an inlet opening (26) on the longitudinal absorption beam (46) and an outlet opening (27) longitudinally downstream of the suspension attachment structure (42) according to a direction opposite to the forward direction of the motor vehicle (1).

2. The frame according to claim 1, wherein the outlet opening (27) is further longitudinally downstream of the wheel well (9) according to the direction opposite to the forward direction of the motor vehicle (1).

3. The frame according to claim 1 or 2, wherein the inlet opening (26) is obtained on said end (46a) along the first axis (D).

4. The frame according to any one of the preceding claims, defining a passenger compartment (6) for the motor vehicle (1) and further comprising a door frame (7) for the attachment of a side door (4) of the motor vehicle (1), the door frame (7) defining an access opening (10) for providing a side access to the passenger compartment (6) and comprising
- a first and a second pillar (11, 12) extending upward from respective lower ends (11b, 12b) toward respective upper ends (11c, 12c), the first pillar (11) being more forward than the second pillar (12) according to the forward direction of the motor vehicle (1), and
- a longitudinal beam (13) fixed to the first and second pillars (11, 12) at the lower ends (11b, 12b) and having a beam portion (14) extending longitudinally between the lower ends (11b, 12b),
wherein the first pillar (11) is arranged behind the suspension attachment structure (42), the suspension attachment structure (42) being structurally connected to the first pillar (11).

5. The frame according to claim 4, wherein the conduit (50) further extends through the first pillar (11) downstream of the suspension attachment structure (42) according to the direction opposite to the forward direction.

6. The frame according to claim 4 or 5, wherein the conduit (50) further extends through the longitudinal beam (13) downstream of the suspension attachment structure (42) according to the direction opposite to the forward direction.

7. The frame according to claim 6, wherein the outlet opening (27) is on the second pillar (12) or the longitudinal beam (13).

8. The frame according to claim 6 or 7, wherein the outlet opening (27) is on a part of a rear end (17) of the longitudinal beam (13), the second pillar (12) being longitudinally arranged between said beam portion (14) and said part of the rear end (17).

9. The frame according to claim 7 or 8, wherein said beam portion (14) extends longitudinally along a second axis (K) and has a first and a second side wall (20, 21) laterally delimiting the conduit (50) and facing each other according to a direction transversal to said second axis (K), the first wall (20) being more internal than the second wall (21) with respect to the passenger compartment (6).

10. The chassis according to claim 9, wherein the outlet opening (27) is delimited by a contour (33) having a rearmost edge (34) according to the forward direction, wherein the rearmost edge (34) is connected to the first wall (20) by a fillet (35) defined at least in part by a surface of the second pillar (12) or the longitudinal beam (13), the second surface laterally delimiting the conduit (50).

11. Motor vehicle (1) comprising the frame (3) according to any of the preceding claims.
